# EUROPEAN PATENT APPLICATION

(11) **EP 4 030 229 A1**
(43) Date of publication of application: **20.07.2022**
(21) Application number: 20864180.3
(22) Date of filing: 20.08.2020
(51) Int. Cl.: G02F 1/155, G02F 1/15

(54) **ELECTROCHROMIC DEVICE HAVING LOW-RESISTANCE TRANSPARENT ELECTRODE STRUCTURE**

(30) Priority: 11.09.2019 KR 20190112527
(71) Applicant: Swis Co., Ltd., Chungcheongnam-do 31035 (KR)
(72) Inventor: KIM, Jeong Geun, Cheonan-si Chungcheongnam-do 31019 (KR)
(74) Representative: Scheele Wetzel Patentanwälte
(86) International application number: PCT/KR2020/011094
(87) International publication number: WO 2021/049772

(57) **Abstract**

Disclosed is an electrochromic device having a low-resistance transparent electrode structure, the electrochromic device including an electrolyte layer having first and second surfaces directed in opposite directions, an electrochromic layer provided on the first surface of the electrolyte layer, a counter electrode layer provided on the second surface of the electrolyte layer, a first transparent electrode layer provided on a surface opposite to the electrolyte layer based on the electrochromic layer, and a second transparent electrode layer provided on a surface opposite to the electrolyte layer based on the counter electrode layer, in which the first and second transparent electrode layers are each provided as a composite layer in which an oxide-based electrode layer made of a material selected from a group consisting of AZO, FTO, and ITO and a metal-based electrode layer made of a material selected from a group consisting of nanowires (AgNWs), PEDOT:PSS, graphene, and a metal mesh are laminated.

## Description

### [Technical Field]

The present disclosure relates to an electrochromic device having a low-resistance transparent electrode structure, and more particularly, to an electrochromic device having a low-resistance transparent electrode structure, which is capable of being formed to have a thin thickness so as to be applied not only between substrates made of glass but also between flexible substrates.

### [Background Art]

This section provides background information related to the present disclosure which is not necessarily prior art.

As technologies for implementing smart glass with adjustable light transmittance, technologies using electrochromic (EC) materials, polymer dispersed liquid crystals (PDLC), and suspended particle devices (SPD) have been known.

Among the technologies, the technology using the electrochromic material has an advantage in that drive voltage and electric power consumption are low in comparison with the technologies using the PDLC and the SPD.

The technology using the electrochromic material uses an oxidation-reduction reaction of the material.

In general, this technology provides a configuration in which a transparent electrode layer, an electrochromic layer, an electrolyte layer, a counter electrode layer, and a transparent electrode layer are sequentially formed on a glass substrate.

A supply of power is allowed or cut off by the transparent electrode layer. The electrochromic layer (WxOy, MoxOy, etc.), which is a cathodic coloration material, is colored when electrons and cations such as Li⁺ or H⁺ are doped into the electrochromic layer, and the electrochromic layer becomes transparent when the electrons and the cations are discharged from the electrochromic layer. On the contrary, the counter electrode layer (VxOy, NixOy, IrxOy, MnxOy, etc.), which is an anodic coloration material, is colored when electrons and cations such as Li⁺ or H⁺ are discharged from the counter electrode layer, and the counter electrode layer becomes transparent when the electrons and the cations are doped into the counter electrode layer.

Meanwhile, an electrochromic device using an electrochromic material changes in color as ionic materials move. Therefore, it is necessary to quickly move the ionic materials to improve color change efficiency and reduce color change time.

The operation (switching time) of the electrochromic device may be improved by a low resistance value.

In general, the electrochromic device uses a transparent conductive film as a transparent electrode layer, and the transparent conductive film is made of aluminum-doped zinc oxide (AZO), fluorine-doped tin oxide (FTO), indium tin oxide (ITO), silver nanowires (AgNWs), poly(3,4-ethylenedioxythiophene) polystyrene sulfonate (PEDOT:PSS), or the like.

However, when the transparent conductive film is manufactured as a single film, the electrical resistance is as high as 100 ohm/sq or more. In addition, it is necessary to increase a thickness (about 100 nm or more) of the transparent conductive film to reduce the resistance value, and the electrical resistance of about 40 ohm/sq may be obtained.

However, the thick transparent conductive film is broken when a substrate made of a flexible material is used, which may cause an electrical short circuit and a deterioration in reliability of the electrochromic device.

### [Disclosure]

### [Technical Problem]

The present disclosure has been made in an effort to provide an electrochromic device having a low-resistance transparent electrode structure, which is capable of being formed to have a thin thickness so as to be applied not only between substrates made of glass but also between flexible substrates.

### [Technical Solution]

This section provides a general summary of the disclosure and is not a comprehensive disclosure of its full scope or all of its features.

One aspect of the present disclosure provides an electrochromic device having a low-resistance transparent electrode structure, the electrochromic device including: an electrolyte layer having first and second surfaces directed in opposite directions; an electrochromic layer provided on the first surface of the electrolyte layer; a counter electrode layer provided on the second surface of the electrolyte layer; a first transparent electrode layer provided on a surface opposite to the electrolyte layer based on the electrochromic layer; and a second transparent electrode layer provided on a surface opposite to the electrolyte layer based on the counter electrode layer, in which the first and second transparent electrode layers are each provided as a composite layer in which an oxide-based electrode layer made of a material selected from a group consisting of AZO, FTO, and ITO and a metal-based electrode layer made of a material selected from a group consisting of nanowires (AgNWs), PEDOT:PSS, graphene, and a metal mesh are laminated.

According to the aspect of the present disclosure, the first transparent electrode layer may be provided on first substrate, the metal-based electrode layer may be provided on the first substrate, the oxide-based electrode layer may be provided on the metal-based electrode layer, the second transparent electrode layer may be provided on a second substrate, the metal-based electrode layer may be provided on the second substrate, and the oxide-based electrode layer may be provided on the metal-based electrode layer.

According to the aspect of the present disclosure, the electrochromic device may include: a first electrolyte protective layer inserted between the electrolyte layer and the electrochromic layer, provided on the first surface, and made of tantalum oxide (TaₓO_{y}, 2 ≤ x ≤ 3, 3 ≤ y ≤ 6); and a second electrolyte protective layer inserted between the electrolyte layer and the counter electrode layer, provided on the second surface, and made of tantalum oxide (TaₓO_{y}, 2 ≤ x ≤ 3, 3 ≤ y ≤6).

According to the aspect of the present disclosure, the first and second substrates may be made of flexible polymer or glass.

According to the aspect of the present disclosure, the metal-based electrode layer may have a thickness with sheet resistance of 40 to 60 ohm/sq, and the oxide-based electrode layer may have a thickness with sheet resistance of 5 to 20 ohm/sq of the first and second transparent electrode layers.

According to the aspect of the present disclosure, the electrolyte layer is made of a material selected from a group consisting of LiAlF₆, LiPON, and gel and liquid electrolytes, the electrochromic layer is made of a material selected from a group consisting of WO₃, polyaniline, and viologen, and the counter electrode layer is made of a material selected from a group consisting of V₂O₅ and NiO.

According to the aspect of the present disclosure, a sum of thicknesses of the electrolyte layer, the electrochromic layer, and the counter electrode layer may be 100 um or less.

### [Advantageous Effects]

According to the present disclosure, it is possible to provide the electrochromic device having flexible functionality by reducing the thickness of the transparent electrode layer while maintaining low sheet resistance.

According to the present disclosure, it is to prevent electrochromic efficiency or reliability from being degraded by ions trapped in the electrochromic layer and the counter electrode layer by the electrolyte protective layer.

### [Description of Drawings]

FIG. 1 is a view illustrating a first embodiment of an electrochromic device having a low-resistance transparent electrode structure according to the present disclosure.
FIG. 2 is a view illustrating a second embodiment of the electrochromic device having a low-resistance transparent electrode structure according to the present disclosure.

### [Modes of the Invention]

Hereinafter, embodiments of an electrochromic device having a low-resistance transparent electrode structure according to the present disclosure will be described in detail with reference to the drawings.

However, it should be noted that the intrinsic technical spirit of the present disclosure is not limited by the following exemplary embodiment, and the following exemplary embodiment may easily be substituted or altered by those skilled in the art based on the intrinsic technical spirit of the present disclosure.

In addition, the terms used herein are selected for convenience of description and should be appropriately interpreted as a meaning that conform to the technical spirit of the present disclosure without being limited to a dictionary meaning when recognizing the intrinsic technical spirit of the present disclosure.

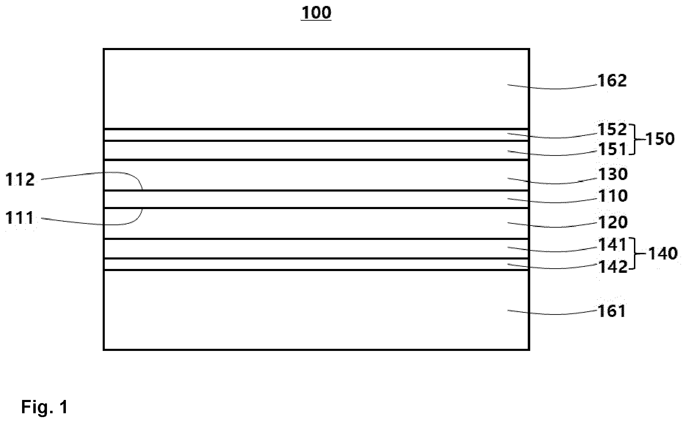

FIG. 1 is a view illustrating a first embodiment of an electrochromic device having a low-resistance transparent electrode structure according to the present disclosure.

Referring to FIG. 1, an electrochromic device 100 having a low-resistance transparent electrode structure according to the present embodiment includes an electrolyte layer 110, an electrochromic layer 120, a counter electrode layer 130, and first and second transparent electrode layers 140 and 150.

The electrolyte layer 110 may be provided in the form of a sheet having first and second surfaces 111 and 112 directed in opposite directions. The electrolyte layer 110 may be made of a solid material. Alternatively, the electrolyte layer 110 may be coated with a liquid, and the liquid may be cured by ultraviolet rays.

The electrolyte layer 110 may be made of a material selected from a group consisting of LiAlF₆, LiPON, and a gel or liquid electrolyte.

The electrochromic layer 120 may be provided on the first surface 111 of the electrolyte layer 110 and made of a material selected from a group consisting of WO₃, polyaniline, and viologen.

The counter electrode layer 130 may be provided on the second surface 112 of the electrolyte layer 110 and made of a material selected from a group consisting of V₂O₅ and NiO.

The first transparent electrode layer 140 is provided on a surface opposite to the electrolyte layer 110 based on the electrochromic layer 120. The second transparent electrode layer 150 is provided on a surface opposite to the electrolyte layer 110 based on the counter electrode layer 130.

In this case, the first and second transparent electrode layers 140 and 150 are each provided as a composite layer made by laminating an oxide-based electrode layer 141 or 151 and a metal-based electrode layer 142 or 152, the oxide-based electrode layer 141 or 151 is made of a material selected from a group consisting of aluminum-doped zinc oxide (AZO), fluorine-doped tin oxide (FTO), and indium tin oxide (ITO), and the metal-based electrode layer 142 or 152 is made of a material selected from a group consisting of nanowires (AgNWs), poly(3,4-ethylenedioxythiophene) polystyrene sulfonate (PEDOT:PSS), graphene, and a metal mesh.

As a result, in the case of the electrochromic device 100 having a low-resistance transparent electrode structure according to the present embodiment, the electrolyte layer 110 is positioned at the center of the electrochromic device, the electrochromic layer 120 is disposed on the first surface 111, and the oxide-based electrode layer 141 or 151 and the metal-based electrode layer 142 or 152, which are included in the first transparent electrode layer 140, are sequentially disposed on the electrochromic layer. In addition, the counter electrode layer 130 is disposed on the second surface 112, and the oxide-based electrode layer 141 or 151 and the metal-based electrode layer 142 or 152, which are included in the second transparent electrode layer 150, are sequentially disposed on the counter electrode layer 130.

In addition, a first substrate 161 is provided on an outer surface of the first transparent electrode layer 140, i.e., a surface opposite to the first surface 111, and a second substrate 162 is provided on an outer surface of the second transparent electrode layer 150, i.e., a surface opposite to the second surface 112.

The first and second substrates 161 and 162 may be made of glass and flexible polymers (e.g., PET, PI, and PEN).

In this case, the metal-based electrode layers 142 and 152 each have a thickness with sheet resistance of 40 to 60 ohm/sq. The oxide-based electrode layers 141 and 151 of the first and second transparent electrode layers 140 and 150 each have a thickness with sheet resistance of 5 to 20 ohm/sq.

In addition, a sum of thicknesses of the electrolyte layer 110, the electrochromic layer 120, and the counter electrode layer 130 may be 100 um or less.

The electrochromic device 100 having a low-resistance transparent electrode structure according to the present embodiment may be manufactured by preparing a first layer made by disposing the metal-based electrode layer 142 or 152 of the first transparent electrode layer 140 on the first substrate 161, disposing the oxide-based electrode layer 141 or 151 on the metal-based electrode layer 142 or 152, and disposing the electrochromic layer 120 on the oxide-based electrode layer 141 or 151, preparing a second layer made by disposing the metal-based electrode layer 142 or 152 of the second transparent electrode layer 150 on the second substrate 162, disposing the oxide-based electrode layer 141 or 151 on the metal-based electrode layer 142 or 152, and disposing the counter electrode layer 130 on the oxide-based electrode layer 141 or 151, and bonding the first and second layers while disposing the electrolyte layer 110 between the first and second layers.

Therefore, it is possible to provide the electrochromic device having flexible functionality by reducing the thickness of the transparent electrode layer while maintaining low sheet resistance.

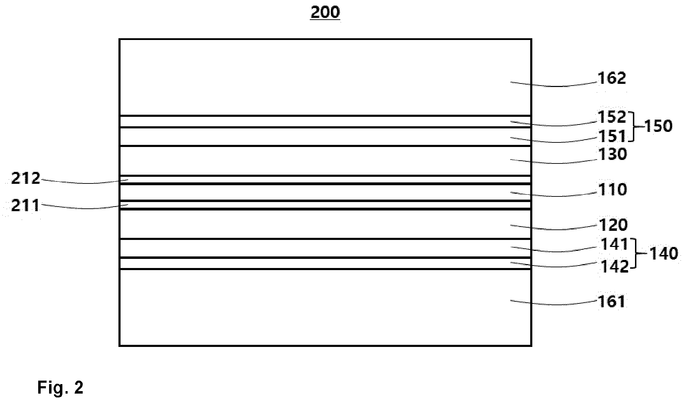

FIG. 2 is a view illustrating a second embodiment of the electrochromic device having a low-resistance transparent electrode structure according to the present disclosure.

Referring to FIG. 2, the electrochromic device 100 having a low-resistance transparent electrode structure according to the present embodiment further includes first and second electrolyte protective layers 211 and 212 in addition to the components according to the first embodiment.

This is to prevent electrochromic efficiency or reliability from being degraded by ions trapped in the electrochromic layer 120 and the counter electrode layer 130 by the electrolyte protective layer.

The first electrolyte protective layer 211 is inserted between the electrolyte layer 110 and the electrochromic layer 120 and provided on the first surface 111.

The second electrolyte protective layer 212 is inserted between the electrolyte layer 110 and the counter electrode layer 130 and provided on the second surface 112.

The first and second electrolyte protective layers 211 and 212 may each be made of tantalum oxide (TaₓO_{y}, 2 ≤ x ≤ 3, 3 ≤ y ≤6), particularly, Ta₂O₅.

Therefore, the electrochromic device is stable even in a wide electric field applied with voltage of 3 to 5.5 V. Further, the electrochromic device may also be excellent in contact properties between positive electrodes, thereby improving charging and discharging characteristics and reducing interfacial resistance.

## Claims

1. An electrochromic device having a low-resistance transparent electrode structure, the electrochromic device comprising:
an electrolyte layer having first and second surfaces directed in opposite directions;
an electrochromic layer provided on the first surface of the electrolyte layer;
a counter electrode layer provided on the second surface of the electrolyte layer;
a first transparent electrode layer provided on a surface opposite to the electrolyte layer based on the electrochromic layer; and
a second transparent electrode layer provided on a surface opposite to the electrolyte layer based on the counter electrode layer,
wherein the first and second transparent electrode layers are each provided as a composite layer in which an oxide-based electrode layer made of a material selected from a group consisting of AZO, FTO, and ITO and a metal-based electrode layer made of a material selected from a group consisting of nanowires (AgNWs), PEDOT:PSS, graphene, and a metal mesh are laminated.

2. The electrochromic device of claim 1, wherein the first transparent electrode layer is provided on first substrate, the metal-based electrode layer is provided on the first substrate, the oxide-based electrode layer is provided on the metal-based electrode layer, the second transparent electrode layer is provided on a second substrate, the metal-based electrode layer is provided on the second substrate, and the oxide-based electrode layer is provided on the metal-based electrode layer.

3. The electrochromic device of claim 2, comprising:
a first electrolyte protective layer inserted between the electrolyte layer and the electrochromic layer, provided on the first surface, and made of tantalum oxide (TaₓO_{y}, 2 ≤ x ≤ 3, 3 ≤ y ≤ 6); and
a second electrolyte protective layer inserted between the electrolyte layer and the counter electrode layer, provided on the second surface, and made of tantalum oxide (TaₓO_{y}, 2 ≤ x ≤ 3, 3 ≤ y ≤6).

4. The electrochromic device of claim 2, wherein the first and second substrates are made of flexible polymer or glass.

5. The electrochromic device of claim 1, wherein the metal-based electrode layer has a thickness with sheet resistance of 40 to 60 ohm/sq, and the oxide-based electrode layer has a thickness with sheet resistance of 5 to 20 ohm/sq of the first and second transparent electrode layers.

6. The electrochromic device of claim 1 or 3, wherein the electrolyte layer is made of a material selected from a group consisting of LiAlF₆, LiPON, and gel and liquid electrolytes, the electrochromic layer is made of a material selected from a group consisting of WO₃, polyaniline, and viologen, and the counter electrode layer is made of a material selected from a group consisting of V₂O₅ and NiO.

7. The electrochromic device of claim 1, wherein a sum of thicknesses of the electrolyte layer, the electrochromic layer, and the counter electrode layer is 100 um or less.
